(19) Europäisches Patentamt
European Patent Office
Office européen des brevets

(11) Publication number: **0 148 022 B1**

(12) # EUROPEAN PATENT SPECIFICATION

(45) Date of publication of patent specification: **03.07.91**

(51) Int. Cl.[5]: **C09B 48/00**, C09B 69/00, C09C 3/12, C09B 67/22, //C09C1/30,C09C1/36,C09C1/40

(21) Application number: **84309075.4**

(22) Date of filing: **21.12.84**

(54) **Silane quinacridone dyes, composite pigments obtainable therefrom, and processes for preparing the same.**

(30) Priority: **27.12.83 IT 2438683**

(43) Date of publication of application:
**10.07.85 Bulletin 85/28**

(45) Publication of the grant of the patent:
**03.07.91 Bulletin 91/27**

(84) Designated Contracting States:
**BE DE FR GB NL**

(56) References cited:
**GB-A- 2 071 683**
**GB-A- 2 113 704**
**US-A- 3 920 695**

**CHEMICAL ABSTRACTS, vol. 97, no. 20, 15th November 1982, page 42, abstract no. 164038x, Columbus, Ohio, US; & JP-A-82 73 029 (TOYO SODA MFG. CO., LTD) 07-05-1982**

(73) Proprietor: **Montedison S.p.A.**
**31, Foro Buonaparte**
**I-20121 Milan(IT)**

(72) Inventor: **Marraccini, Antonio**
**4, Corso Riviera Dormelletto**
**Novara(IT)**
Inventor: **Carlini, Filippo Maria**
**7, Corso Torino**
**Novara(IT)**
Inventor: **Pasquale, Antonio**
**8, Corso Milano**
**Novara(IT)**
Inventor: **Pontevivo, Michele**
**4, Via Monte Nero**
**Novara(IT)**

(74) Representative: **Whalley, Kevin et al**
**MARKS & CLERK 57/60 Lincoln's Inn Fields**
**London WC2A 3LS(GB)**

**EP 0 148 022 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to quinacridone dyes containing, in chemical combination, at least one silane group, to the corresponding composite pigments obtainable therefrom by association with a solid inorganic substrate or support, and to processes for preparing such silane quinacridone dyes and corresponding composite pigments.

Whenever used in the following description, the term "composite pigment" means a pigmentary material comprising a quinacridone dye containing at least one silane group, associated with an inorganic solid substrate or support.

The association of the quinacridone dye containing at least one silane group, or, briefly, silane quinacridone dye, with the solid substrate or support, impacts a pigmentary nature to the dye.

Such association is obtained by the formation of chemical bonds (grafting) between the silane portion of the dye and the inorganic substrate or support.

Composite pigments are already known from GB-A- 2 113 704. According to this reference a pigment is obtained by grafting, onto an inorganic pigment, a quinophthalonic-silanic dye which does not exhibit, per se, any pigmentary characteristic.

The pigmentary features of the composite product are entirely bound to the inorganic component, which becomes coloured or dyed because of the properties of the used silanic "dye".

The document JP-A- 82,73029 disclosed a composite pigment where a quinacridonic component is coupled to an inorganic inert support (e.g. silica); silanes are used as "coupling agents."

This prior art composite pigment is in fact a purely physical mixture, characterized by the absence of any chemical bond of the quinacridone either with silica or with the silanic agent, which merely affects, as is known, the silica particles, thus supplying same silica with physical compatibility with respect to the organic component, namely to (not-modified) quinacridones.

An aim of the present invention is to provide silane quinacridone dyes, insoluble in water, capable of providing composite pigments having high pigmentary properties.

Further aims of the invention are the preparation of the above said dyes and pigments by simple and economic methods.

The present invention in one aspect provides quinacridone dyes containing at least one silane group having the formula:

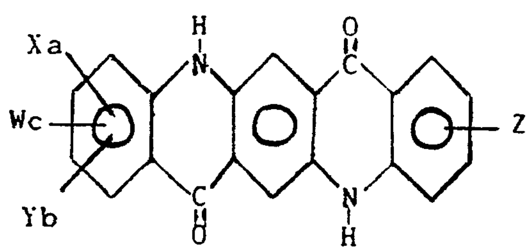

(I)

wherein X is an $-SO_2NHR$ group, where R is an alkyl group, linear or branched, having from 1 to 6 carbon atoms, a cycloalkyl group, a phenyl group optionally substituted by one or more halogens or alkyl or alkoxy groups having from 1 to 6 carbon atoms;

Y and Z indicate a silane group having the formula

$$-SO_2-NH-(CH_2)_n-\underset{(R_2)_q}{\underset{|}{Si}}-(R_1)_m(OH)_{p-m},$$

where $R_1$ is an alkoxy group having 1 or 2 carbon atoms;

$R_2$ is an alkyl group having from 1 to 4 carbon atoms, or a phenyl group; n is 3, 4 or 5; q is 0 or 1; p and m are integers such that when q is 1, p is 2 and m is 0, 1 or 2 and when q is 0, p is 3 and m is 0, 1, 2 or 3;

W is an $-SO_3H$ group;

a,b and c are 0 or 1, selected such that the sum a + b + c is equal to 1.

Such compounds according to the invention may be prepared, according to another aspect of the

invention, by a process comprising reacting a quinacridone sulphochloride having the formula:

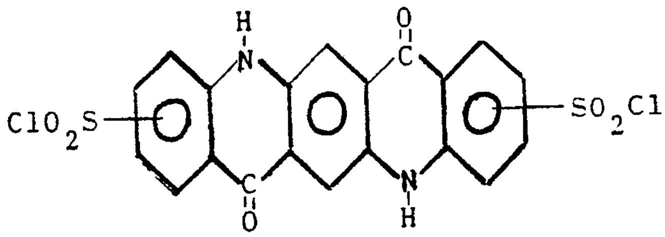

(II)

with a silane compound having the formula

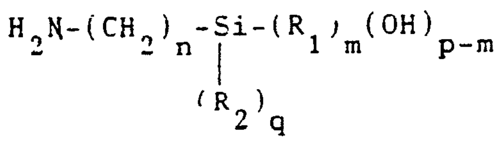

(III)

wherein $R_1$, $R_2$, m, n, p and q are as defined above, in a molar ratio of silane compound (III): sulphochloride (II) of at least 1, and optionally with a compound having the formula:

$H_2N - R$ (IV)

wherein R is as defined above, utilizing at least one mole of silane compound (III) and at least one mole of amine (IV) for each mole of sulphochloride (II), in a reaction medium comprising water and/or an organic solvent, at a temperature from 5° C to the reflux temperature of the reaction medium, for 1 to 12 hours.

In practice, when it is desired to obtain essentially the dyes of formula (I) wherein b is 1, a molar ratio of silane compound (III): sulphochloride (II) of at least 2 must be used; when it is desired to obtain the dyes of formula (I) wherein c is 1, a substantially equimolar ratio of compound (III): sulphochloride (II) is used; when it is desired to obtain the dyes of formula (I) wherein a is 1, substantially equimolar ratios of the compounds (III): (II): (IV) are used.

The reaction can be optionally conducted in the presence of a hydrochloric acid-acceptor compound such as $Na_2CO_3$, $NaHCO_3$, triethylamine or pyridine.

The reaction can be carried out in aqueous suspension, in organic solvents or in mixtures of water and organic solvents miscible with water.

As water miscible organic solvents there may be utilized, for example, dimethylformamide, dioxane, acetonitrile, pyridine, and triethylamine, and as water-immiscible solvents there may be utilized, for example, xylene, nitrobenzene, and dichlorobenzene.

The quinacridone sulphochloride having the formula (II) can be prepared according to essentially conventional methods, for example by treating quinacridone with chlorosulphonic acid at a temperature from 5° C to 120° C for 1 to 4 hours.

Silane compounds of formula (III), which have proved to be particularly suitable, are those derived from amino-alkoxy-silanes, such as, for example,
γ-aminopropyl-triethoxysilane,
δ-aminobutyl-triethoxysilane,
δ-aminobutyl-phenyl-diethoxysilane, and
γ-aminopropyl-methyl-diethoxysilane. Such amino-alkoxy silanes are known compounds which are commercially available. However, they can be prepared. according to conventional techniques, for example by reacting the correspondent chloro-alkoxy-silanes with aliphatic amines.

The amines of formula (IV) which can be used are for example methylamine, ethylamine, propylamine, butylamine, pentylamine, hexylamine and their branched isomers, aniline, cyclohexylamine, ortho-, meta- and para- toluidines, anisidines or chloro-anilines, 2,4 and 3,5-xylidines, dianisidines or dichloroanilines, 2-methyl-4-chloroaniline, and 2,5-dimethoxy-4-chloroaniline.

The silane quinacridone dyes of formula (I) possess good pigmentary properties, such as good stability to solvents, and when used in stove enamels they give products having high tinting strength, with red shades, particularly pure and bright, good general resistance and excellent photostability.

The silane quinacridone dyes of formula (I), since they contain in their molecules silanol groups and/or alkoxyl groups hydrolyzable to silanol groups -Si$(OH)_3$, are capable of self-condensation reactions between the silanol groups, as well as of chemical reaction with surface hydroxyl groups of suitable inorganic substrates or supports, which condense with those of the dyes, thus forming stable chemical bonds (grafting) between the dye and the substrate, giving rise to a composite product having excellent pigmentary characteristics.

The aforesaid dyes are therefore preferably utilized in the preparation of composite pigments, according to another aspect of the present invention, comprising silane quinacridone dyes of formula (I) grafted onto an inorganic substrate or support.

The silane dyes of formula (I) which have proved to be particularly suitable for preparing composite pigments are those in which c is 0, q is 0, and when b is 1, Y is the same as Z.

Inorganic substrates or supports particularly suitable for imparting pigmentary properties to the silane quinacridone dyes of formula (I) are the following: $TiO_2$, in its gel, semicrystalline, rutile or anatase forms, also of the commercial type, which can carry surface coatings comprising mixtures containing one or more oxides selected from $SiO_2$, $Al_2O_3$, $TiO_2$; moreover it is possible to employ physical (mechanical) mixtures of $TiO_2$ with $SiO_2$ and/or $Al_2O_3$, as well as $SiO_2$ and/or $Al_2O_3$, such substrates of supports being finely particulated. Due to their superior characteristics, it is preferable to employ mixed substrates of $TiO_2$, $SiO_2$ and/or $Al_2O_3$ prepared by precipitation of $SiO_2$ and/or $Al_2O_3$, also as alumino-silicates onto crystalline $TiO_2$ particles, according to conventional methods.

In relation to the desired uses, hiding degree or power or tinting strength, the above said substrates or supports may also be utilized in mixtures with each other.

The specific surface area of such substrates or supports may vary within wide limits, from 5 to 500 $m^2/g$, preferably from 10 to 200 $m^2/g$.

Due to their excellent properties, the composite pigments particularly preferred are those containing the silane quinacridone dye of formula (I) in grafted form in amounts from 10 to 50% by weight.

According to a yet further aspect of the invention, a process for preparing the composite pigments comprising the silane quinacridone dyes (I) grafted on the inorganic substrates or supports comprises reacting the selected substrate or support with the silane dye (I), in a reaction medium comprising water and/or an inert organic solvent, at a temperature from 20°C to the reflux temperature of the reaction medium, and separating the resulting product by filtration, followed by washing and drying.

Such treatment can be advantageously carried out by grinding the silane dye with the substrate or support in the reaction medium, either at room temperature or in a hot reactor for a time period of 2 to 12 hours, according to the reaction temperature used. Particularly advantageous results are obtained if the composite pigment, after its separation by filtration, is subjected to a dry heat treatment in an oven for 4-8 hours at 60-110°C, prior to the washing, which washing is accomplished in order to remove the non-grafted silane dye.

The inert organic solvents employed can be for example the aliphatic hydrocarbons (n-heptane), their chlorinated derivatives (tetrachloroethane), alicyclic and aromatic hydrocarbons and their derivatives (benzene, toluene, xylenes, nitrobenzene, chlorobenzenes), alkyl or aryl ethers and ketones (N-methyl-pyrrolidone, diphenylether), oxides (dioxane), amides (dimethylformamide), nitriles (acetonitrile), and sulphoxides (dimethylsulphoxide).

The preparation process of the present invention has proved particularly suitable for obtaining deeply coloured pigments, having a high tinting strength, even in the presence of inorganic substrates or supports having a low specific surface area, such as for example highly hiding $TiO_2$.

The composite pigments according to the present invention can have a composition varying over a wide range, depending on the nature, granulometry and specific surface area of the substrate particles and in relation to the desired tinting strength of the pigment.

Granulometric analysis of a composite pigment according to the invention indicates that the organic portion is essentially distributed on the surface of the inorganic substrate particles.

X-ray diffractometric analysis indicates that the composite pigment particles exhibit the crystallinity which is characteristic of the substrate, while the grafted quinacridone coating is of an amorphous nature.

The quinacridone pigments of the present invention, due to their composite nature obtained by chemical bonds between the silane organic component and the inorganic component, do not give rise to crystallization phenomena, nor do they change their crystalline form in the presence of aromatic solvents even if hot treated.

Moreover, pigmentary compositions based on solvents do not cause sedimentation phenomena, not even after prolonged storage.

The composite pigments, both in their highly hiding and transparent forms, exhibit excellent pigmentary

properties, are insoluble in common organic and aqueous solvents, possess excellent resistance to migration in polyvinylchloride (PVC), to overpainting in alkyd stove enamels and to acid or alkaline treatments. They have excellent photostability and very good tinting strength, are stable to heat both when obtained in transparent form and at ever increasing degrees of hiding power.

They are therefore advantageously utilized in painting products, in air and stone enamels, in the pigmentation of plastic materials, such as PVC, polystyrene, polyethyleneterephthalate, etc., and in printing inks, according to conventional applicative techniques, to obtain particularly pure and bright red-coloured products.

The mechanical and/or heat treatments employed in such conventional techniques do not substantially modify the pigmentary characteristics of the composite pigments of the present invention.

The composite pigments have the considerable advantage of being composed of an inorganic substrate or support of low cost, capable of imparting excellent pigmentary characteristics, in particular the desired degree of hiding power or transparence, excellent resistance to solvents, stability to crystallization and a non-flocculating nature, on which is grafted a silane quinacridone dye having good photostability, high tinting strength, and pure and bright shades.

In general, the composite pigments according to the invention may be suitably used for colouring paints, air and stove enamels, printing inks, and plastics materials.

The invention will be further described with reference to the following illustrative examples. In the examples, all parts and percentages, unless otherwise specified, are by weight.

EXAMPLE 1

200 ml of chlorosulphonic acid, placed in a reactor, in anhydrous ambient, and cooled at 5°-10°C, were gradually additioned, in 1.5 hours, with 20 parts of beta-quinacridone, then the mixture was gradually heated in one hour up to 80°C and maintained at this temperature for 3 hours.

The mixture was cooled at 70°C-75°C and 12 ml of thionyl chloride were added in 15 minutes, then the temperature was raised again to 80°C and the reaction mixture was maintained at this temperature for 2 more hours.

The mass was cooled at 5°-10°C, 800 ml of acetone were added, then the reaction medium was filtered, washed with acetone until the liquid became colourless, then with water and ice, with acetone again and finally it was pump-dried by vacuum suction.

16.49 parts (0.0225 moles) of the sulphochloride derivative thus obtained, 4 parts of water, 100 ml of triethylamine and 11 parts (0.05 moles) of γ-aminopropyl-triethoxysilane were reacted at 50°C for 3.5 hours.

The reaction mass, hot filtered, gave a cake which was twice treated with 200 parts of water, 600 ml of acetone and 50 ml of 30% ammonium hydroxide.

After filtration the cake was treated again with 200 parts of water, 200 parts of 30% $NH_4OH$ and 100 ml of dimethylformamide and maintained at 50°C for 1 hour.

The mixture was filtered and the cake was treated with a 50%/50% mixture of water and dimethylformamide at 80°-90°C, the aqueous mixture was filtered again, repeatedly washed with water, then with methanol and was finally dried in the air.

A friable intensely red-coloured powder was obtained which, upon elemental analysis, gave the following results:

% C = 44; % H = 4.4; % N = 7.62; % S = 8.5; %Si = 7.5.

The powder, subjected to infrared spectrographic analysis, revealed the bands characteristic of the ≡Si-(OH) silanolic groups in the area at 3450 $cm^{-1}$ and in the area between 1000 and 1200 $cm^{-1}$ and the bands characteristic of the sulphonamidic groups ($-SO_2-NH-$) in the area between 1300 and 1500 $cm^{-1}$.

The analytical and spectroscopic analyses essentially corresponded to a dye having the formula:

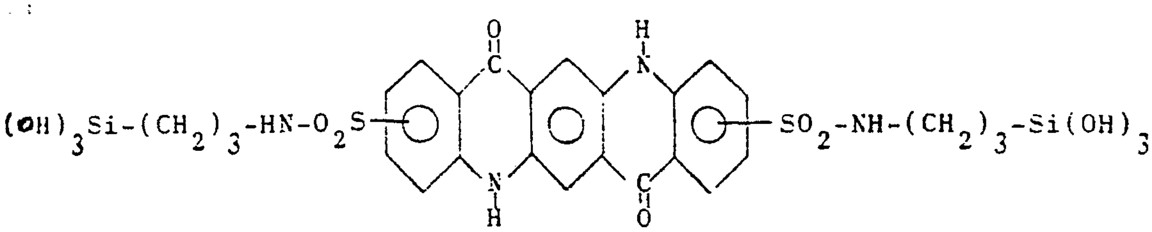

This dye can also be partially present in oligomeric form, by the formation of≡Si-O-Si≡siloxanic bonds between the $-Si(OH)_3$ silanolic functions present in the molecule.

EXAMPLE 2

12.22 parts (0.024 moles) of the quinacridone sulphochloride derivative obtained in example 1 were reacted with 0.65 parts (0.011 moles) of n-propylamine in 90 ml of triethylamine for 2 hours at room temperature and then for 0.5 hours at 35°-40°C. 3.12 parts (0.014 moles) of γ-aminopropyl-triethoxysilane were subsequently added; the temperature was brought to 55°-60°C and the reaction medium was maintained at this temperature for 2.5 hours.

The reaction medium was hot filtered and subsequently washed and dried as described in example 1.

A friable deeply red coloured powder was obtained which, upon elemental analysis, gave the following results

% C = 48; % H = 4.3; % N = 8.5; % S = 10; % Si = 5.

Infrared analysis revealed the same characteristic bands as found for the powder of example 1.

The analytical and spectroscopic analyses essentially corresponded to a dye having the formula:

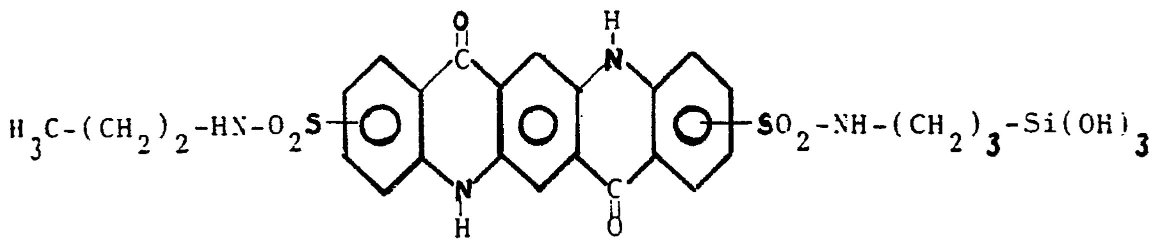

This dye can also be partially present in oligomeric form.

EXAMPLE 3

By operating in conditions similar to those described in example 2, but employing 1.11 parts of aniline, instead of n-propylamine, and 3.3 parts of γ-aminopropyl-triethoxysilane, a deeply red coloured powder was obtained which, upon elemental analysis, gave the following results.

%C = 51; % H = 4; % N = 8.4; % S = 10.1; % Si = 4.

The analytical and spectroscopic analyses essentially corresponded to a dye having the formula:

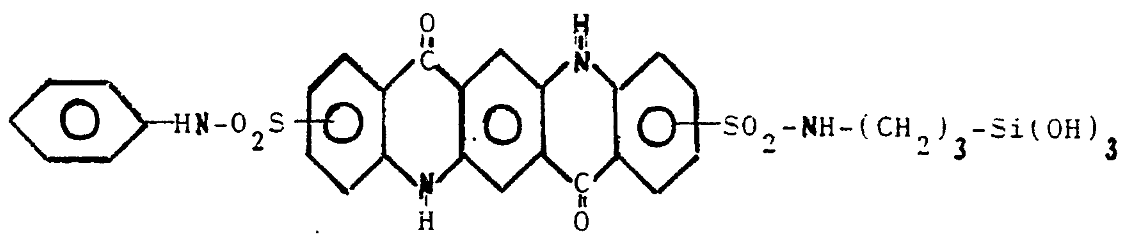

This dye can also be partially present in oligomeric form.

EXAMPLE 4

A silanated quinacridone composite pigment was prepared by using a mixed inorganic substrate of $TiO_2$, $SiO_2$ and $Al_2O_3$, prepared as follows: 100 parts of $TiO_2$ were dispersed under mechanical stirring in 1 litre of water and the dispersion was then heated to 60°C. After 15-minute stirring, 210 ml of a sodium silicate solution (titre: 365.47 parts/l of $SiO_2$) were added and successively, in 3 hours, 200 ml of an aluminium sulphate solution (titre: 60 parts/l of $Al_2O_3$) were added. Addition was stopped when the pH of the slurry reached a value of 6. Stirring was continued for 1 hour, then the product was filtered, washed with water to remove soluble salts and finally dried at a temperature of 70°C.

The dry product was crushed and then ground in an automatic mortar. A white powder having the

following composition was obtained:

% $TiO_2$ = 43.4; % $SiO_2$ = 35.1; % $Al_2O_3$ = 7.15; % $H_2O$ = 14.35; its specific surface area, determined by a "Sorptometer" was 120 $m^2/g$, actual specific weight = 2.74 g/ml, apparent specific weight = 0.69 g/cc: % porosity = 7.45 and total porosity = 1.06 ml/g.

2 parts of the substrate thus obtained and 1 part of the dye obtained according to example 1 were wet-ground for 12 hours in xylene, then filtered and the cake obtained was hot treated overnight at 110° C, then hot washed with xylene, dimethylformamide, methanol and finally dried.

A particularly bright deeply red coloured powder was obtained which, upon elemental analysis, was found to consist of 68% of inorganic ashes.

This powder proved particularly stable to treatments, even under hot conditions, with organic solvents and with water. In applications such as alkyd stove enamels and polyvinylchloride, it provided bright red-coloured products having high hiding power, excellent tinting strength, resistance to overpainting, and to migration and light, both in mass and when diluted with $TiO_2$.

The powdery composite pigment, subject to X-ray diffractometric analysis, under CuK$\alpha$ 1.5418 radiation, proved to be formed by particles having the crystallinity characteristic of rutile $TiO_2$, while $SiO_2$, $Al_2O_3$ and the silanic quinacridone coating was found to be amorphous.

Due to the amorphous nature of the silanic quinacridone coating, the composite pigment proved particularly stable and not subject to crystallization phenomena deriving from changes of crystalline form due, for instance, to hot treatments with solvents such as xylene, dimethylformamide and dichlorobenzene. The pigment subjected to the abovesaid treatments did not change its shade.

Due to its composite nature, the pigment did not present sedimentation phenomena, due to demixing of the components, in formulations with $TiO_2$ such as those employed for the stove enamels.

EXAMPLE 5

One part of the dye obtained as described in example 1 was introduced into a reactor with 70 parts of water, 1 part of $TiO_2$ and 2.1 ml of sodium silicate (titre: 365.47 parts/1 of $SiO_2$).

The suspension was heated to 60° C and, under stirring, additioned in 3 hours with 2 ml of aluminium sulphate solution (titre: 60 parts/1 of $Al_2O_3$), maintained at 60° C for 1 hour and then cooled at room temperature.

After filtration, the cake obtained was washed with water to neutral pH, dried in an oven at 110° C for one night, then repeatedly washed with hot water and finally dried. A bright deeply red-coloured powder was obtained which, upon elemental analysis, was found to consist of 67.5% of inorganic ashes.

The product exhibited applicative properties, solidity, hiding power, tinting strength and diffractometric characteristics similar to those of the pigment obtained according to example 4.

Similarly to the pigment of example 4, the pigment did not exhibit the crystallization phenomena and consequently did not change its shade when hot-treated with solvents, nor did it exhibit the demixing phenomenon of the components, in formulations with $TiO_2$.

EXAMPLE 6

One part of the dye obtained as described in the example 1 was introduced into a reactor with 70 parts of water, and 4.2 ml of sodium silicate solution (titre: 365.47 parts/l of $SiO_2$). The suspension was heated to 60° C and, under stirring, additioned in 3 hours with 4 ml of aluminium sulphate solution (titre: 60 parts/l of $Al_2O_3$), maintained at 60° C for 1 hour and then cooled at room temperature.

After filtration, the cake obtained was washed with water to neutral pH, dried in an oven at 110° C for one night, then repeatedly washed with hot water and finally dried.

A particularly bright red-coloured powder was obtained which, upon elemental analysis, was found to consist of 67.5% of inorganic ashes.

Upon X-ray analysis, the composite pigment was found to consist of amorphous particles.

In applications such as in stove enamels and in polyvinylchloride, the powder gave products of a bright red shade, perfectly transparent, having excellent solidity and photostability and free from crystallinization phenomena and demixing in formulations with $TiO_2$.

EXAMPLES 7-16

By operating according to the procedures described in examples 4, 5 and 6 and employing the silanated quinacridone dyes described in examples 1, 2, 3 in combination with the inorganic substrates

given in Table 1, 10 red pigments with slight shade differences were prepared, having different hiding power or transparency degrees and with characteristics of stability similar to those of the products obtained in examples 4, 5 and 6.

TABLE 1

| Example | Dye of the example | Inorganic substrate |
|---|---|---|
| 7 | 1 | $TiO_2$-$SiO_2$ |
| 8 | 1 | $TiO_2$-$Al_2O_3$ |
| 9 | 1 | $SiO_2$ |
| 10 | 1 | $Al_2O_3$ |
| 11 | 2 | $TiO_2$-$SiO_2$-$Al_2O_3$ |
| 12 | 2 | $SiO_2$ |
| 13 | 2 | $TiO_2$-$Al_2O_3$ |
| 14 | 3 | $TiO_2$-$SiO_2$ |
| 15 | 3 | $Al_2O_3$ |
| 16 | 3 | $TiO_2$-$SiO_2$-$Al_2O_3$ |

EXAMPLE 17 (application in PVC)

In a rotary arm mixer there were mixed, at 70°C: 1.0 parts of the pigment obtained according to example 4, previously ground,
100 parts of powdered polyvinylchloride (PVC),
1.5 parts of calcium stearate for exerting a complexing and stabilizing action,
3.0 parts of epoxidized soybean oil,
0.5 parts of lubricant (mixture of glycerides from $C_{16}$ to $C_{36}$).
2.0 parts of $TiO_2$.

The resulting mixture was then treated at 180°C in a three-roll refiner until complete dispersion of the pigment occurred, in order to obtain a sheet exhibiting a bright red colour, having excellent hiding power, good colour brightness, good photostability, good tinting strength, good stability to heat and excellent stability to migration.

EXAMPLE 18 (application in enamels)

5.0 parts of the pigment obtained according to example 4 were mixed by grinding with 95.0 parts of a fluid carrier having the following composition:
22% of alkyd resin,
19% of melamine resin,
59% of xylene.

Homogenization was accomplished in a ball mill by grinding the mixture in the presence of porcelain balls having a diameter of 10 mm, for a time of 24 hours.

The resulting enamel was applied onto the surface to be painted, allowed to dry overnight and then was placed in an oven at 120°-125°C for 30 minutes.

A bright red-coloured paint with excellent hiding power, photostability and stability to overpainting and good tinting strength was obtained.

In order to obtain a paint of a lighter shade and having higher hiding power, 1 part of the enamel obtained as hereinabove described was further diluted with 9 parts of a white synthetic stove enamel (10% of $TiO_2$) having the following composition:

30% of alkyd resin,
27% of melamine resin,
33% of xylene,
10% of $TiO_2$.

Homogenization was carried out in a ball mill by grinding the mixture in the presence of porcelain balls having a diameter of 10 mm for a time period of 24 hours.

The cut enamel so obtained was applied onto the surface to be painted; it was allowed to dry overnight and then was maintained in an oven at 120°-125°C for 30 minutes. A light red-coloured paint of pure shade having excellent general stabilities and high hiding power was obtained.

## Claims

1. A quinacridone dye containing at least one silane group, characterized by having the formula:

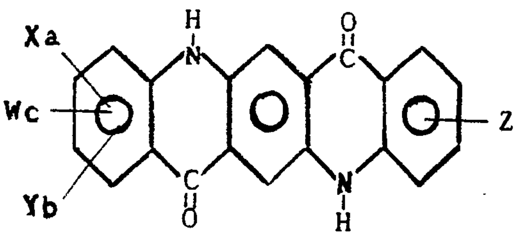

(I)

wherein X is an $-SO_2NHR$ group, where R is an alkyl group, linear or branched, having from 1 to 6 carbon atoms, a cycloalkyl group, or a phenyl group optionally substituted by one or more halogens or alkyl or alkoxy groups having from 1 to 6 carbon atoms;
Y and Z are each a silane group having the formula:

$$-SO_2-NH-(CH_2)_n-\underset{(R_2)_q}{\underset{|}{Si}}-(R_1)_m(OH)_{p-m},$$

where $R_1$ is an alkoxy group having 1 or 2 carbon atoms;
$R_2$ is an alkyl group having from 1 to 4 carbon atoms, or a phenyl group; n is 3, 4 or 5; q is 0 or 1; and p and m are integers such that when q is 1, p is 2 and m is 0, 1 or 2 and when q is 0, p is 3 and m is 0, 1, 2 or 3;
W is an $-SO_3H$ group;
a, b and c are 0 or 1, selected such that the sum a + b + c is equal to 1.

2. A silane quinacridone dye as claimed in claim 1, characterized in that c is 0, q is 0, and when b is 1, Y is the same as Z.

3. A process for preparing a quinacridone dye according to claim 1, characterized in that a quinacridone sulphochloride having the formula:

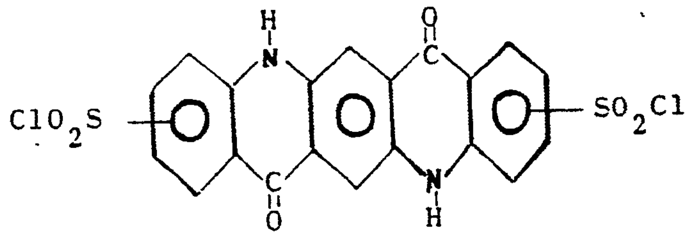

(II)

is reacted with a silane compound having the formula:

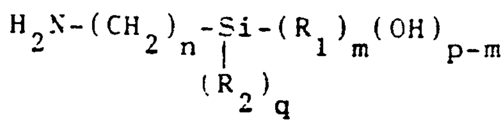

(III)

wherein $R_1$, $R_2$, m, n, p and q are as defined in claim 1, in a molar ratio of silane compound (III): sulphochloride (II) of at least 1, and optionally with an amine compound having the formula:

$H_2N$-R (IV)

wherein R is as defined in claim 1, utilizing at least one mole of silane compound (III) and at least 1 mole of amine (IV) for each mole of sulphochloride (II), in a reaction medium comprising water and/or an organic solvent, at a temperature from 5° C to the reflux temperature of the reaction medium, for 1 to 12 hours.

**4.** A process as claimed in claim 3, characterized in that the reaction is carried out in the presence of a hydrochloric acid-acceptor compound.

**5.** A process as claimed in claim 4, characterized in that the hydrochloric acid-acceptor compound is selected from $Na_2CO_3$, $NaHCO_3$, triethylamine and pyridine.

**6.** A process as claimed in any of claims 3 to 5, characterized in that the organic solvent is selected from dimethylformamide, dioxane, acetonitrile, pyridine, triethylamine, xylene, nitrobenzene and dichlorobenzene.

**7.** A process as claimed in any of claims 3 to 6, characterized in that the amino-alkoxysilane of formula (III) is selected from
γ-aminopropyl-triethoxysilane,
δ-aminobutyl-phenyl-diethoxysilane,
γ-aminopropyl-methyl-diethoxysilane, and
δ-aminobutyl-triethoxysilane.

**8.** A process as claimed in any of claims 3 to 7, characterized in that the amine of formula (IV) is selected from methylamine, ethylamine, propylamine, butylamine, pentylamine, hexylamine and their branched isomers, cyclohexylamine, aniline, ortho-, meta-, and para-toluidines, chloroanilines or anisidines, 2,4- or 3,5-xylidines, dianisidines or dichloroanilines, 2-methyl-4-chloroaniline, 2,5-dimethoxy-4-chloroaniline.

**9.** A composite pigment, characterized by comprising a silane quinacridone dye as claimed in claim 1 or 2, grafted onto a solid inorganic substrate or support.

**10.** A composite pigment as claimed in claim 9, characterized in that the inorganic substrate or support is selected from $TiO_2$ gel, semicrystalline $TiO_2$, rutile $TiO_2$ and anatase $TiO_2$; mixtures of $TiO_2$ with $SiO_2$ and/or $Al_2O_3$; $SiO_2$ and/or $Al_2O_3$; and mixtures thereof; the said substrate or support being finely particulated and having a specific surface area of from 5 to 500 $m^2/g$.

11. A composite pigment as claimed in claim 9 to 10, characterized by containing from 10 to 50% by weight of silane quinacridone dye in grafted form.

12. A process for preparing a composite pigment according to claim 9, characterized by comprising reacting the inorganic substrate or support with a silane quinacridone dye of formula (I) in a reaction medium comprising water and/or an inert organic. solvent, at a temperature from 20° C to the reflux temperature of the reaction medium, and separating the pigment by filtration followed by washing and drying .

13. A process as claimed in claim 12, characterized in that the reaction is carried out by grinding the silane dye with the substrate or support in the presence of the reaction medium either at room temperature or in a hot reactor, for a time period from 2 to 12 hours.

14. A process as claimed in claim 12 or 13, characterized in that the composite pigment, separated by filtration, is subjected to a dry thermal treatment in an oven at 60° C-110° C for 4-8 hours before washing.

15. A paint, air enamel, stove enamel, printing ink, or plastics mateial, when coloured with a composite pigment as claimed in any of claims 9 to 11.

**Revendications**

1. Un colorant de type quinacridone contenant au moins un groupe silane, caractérisé par la formule:

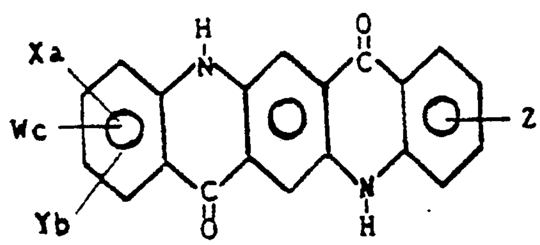

(I)

dans laquelle X est un groupe $-SO_2NHR$, où R est un groupe alkyle linéaire ou ramifié ayant de 1 à 6 atomes de carbone, un groupe cycloalkyle, un groupe phényle éventuellement substitué par un ou plusieurs atomes d'halogène ou groupes alkyles ou alcoxy ayant de 1 à 6 atomes de carbone;
Y et Z indiquent un groupe silane ayant la formule:

$$-SO_2-NH-(CH_2)_n-\underset{\displaystyle (R_2)_q}{\underset{|}{Si}}-(R_1)_m(OH)_{p-m}$$

dans laquelle $R_1$ est un groupe alcoxy ayant 1 ou 2 atomes de carbone; $R_2$ est un groupe alkyle ayant 1 à 4 atomes de carbone, ou un groupe phényle; n est égal à 3, 4 ou 5; q est égal à 0 ou 1; p et m sont des entiers tels que lorsque q = 1, p = 2 et m = 0, 1 ou 2 et lorsque q = 0, p = 3 et m = 0, 1, 2 ou 3;
W est un groupe $-SO_3H$;
a, b et c sont 0 ou 1, choisis de telle sorte que la somme a + b + c = 1.

2. Un colorant de type quinacridone suivant la revendication 1, caractérisé en ce que c est égal à 0, q est égal à 0 et lorsque b est égal à 1, Y et Z sont identiques.

3. Un procédé pour préparer un colorant de type quinacridone suivant la revendication 1, caractérisé en ce qu'un sulfochlorure de quinacridone ayant la formule:

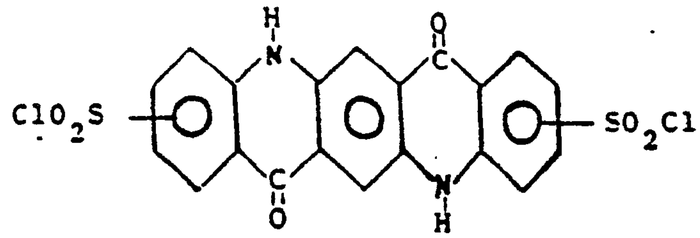

(II)

est traité avec un silane ayant la formule:

$$NH_2-(CH_2)_n-\underset{\underset{(R_2)_q}{|}}{Si}-(R_1)_m(OH)_{p-m} \qquad (III)$$

dans laquelle $R_1$, $R_2$, m, n, p et q sont tels que définis plus haut, avec un rapport molaire du silane (III) au sulfochlorure (II) d'au moins 1, et éventuellement avec un composé de formule:

$NH_2$-R (IV)

dans laquelle R est tel que défini plus haut, avec au moins une mole du silane (III) et au moins une mole de l'amine (IV) pour chaque mole de sulfochlorure (II), dans un milieu réactionnel comprenant de l'eau et/ou un solvant organique, à une température comprise entre 5° C et la température de reflux du milieu réactionnel, pendant 1 à 12 heures.

**4.** Un procédé suivant la revendication 3, caractérisé en ce que la réaction est conduite en présence d'un composé accepteur d'acide chlorhydrique.

**5.** Un procédé suivant la revendication 4, caractérisé en ce que l'accepteur d'acide chlorhydrique est choisi parmi $Na_2CO_3$, $NaHCO_3$, triéthylamine et pyridine.

**6.** Un procédé suivant l'une quelconque des revendications 3 à 5, caractérisé en ce que le solvant organique est choisi parmi le diméthylformamide, le dioxane, l'acétonitrile, la pyridine, la triéthylamine, le xylène, le nitrobenzène et le dichlorobenzène.

**7.** Un procédé suivant l'une quelconque des revendications 3 à 6, caractérisé en ce que l'aminoalcoxy silane de formule (III) est choisi parmi le $\gamma$-aminopropyltriéthoxy silane, le $\delta$-aminobutyltriéthoxy silane, le $\delta$-aminobutylphényldiéthoxy silane et le $\gamma$-aminopropylméthyldiéthoxy silane.

**8.** Un procédé suivant l'une quelconque des revendications 3 à 7, caractérisé en ce que l'amine de formule (IV) est choisie parmi la méthylamine, l'éthylamine, la propylamine, la butylamine, la pentylamine, l'hexylamine et leurs isomères ramifiés, l'aniline, la cyclohexylamine, les o-, m- et p-toluidines, anisidines et chloroanilines, les 2,4- et 3,5-xylidines, dianisidines ou dichloroanilines, la 2-méthyl-4-chloroaniline et la 2,5-diméthoxy-4-chloroaniline.

**9.** Un pigment composite, caractérisé en ce qu'il comprend un colorant de type silane quinacridone suivant les revendications 1 ou 2, greffé sur un substrat ou un support inorganique solide.

**10.** Un pigment composite suivant la revendication 9, caractérisé en ce que le substrat ou support organique est choisi parmi un gel de $TiO_2$, un $TiO_2$ semicristallin, le $TiO_2$ rutile ou le $TiO_2$ anatase; des mélanges de $TiO_2$ avec $SiO_2$ et/ou $Al_2O_3$; $SiO_2$ et/ou $Al_2O_3$; et leurs mélanges; ce substrat ou support étant sous forme de fines particules et ayant une aire superficielle spécifique comprise entre 5 et 500 $m^2/g$.

**11.** Un pigment composite suivant les revendications 9 ou 10, caractérisé en ce qu'il contient de 10 à 50%

en poids de colorant de type silane quinacridone sous forme greffée.

**12.** Un procédé pour préparer un pigment composite suivant la revendication 9, caractérisé en ce qu'il comprend la réaction du support ou substrat inorganique avec un colorant de type silane quinacridone de formule (I) dans un milieu réactionnel comprenant de l'eau et/ou un solvant organique inerte, à une température comprise entre 20 °C et la température de reflux du milieu réactionnel et la séparation du pigment par filtration, suivie d'un lavage et d'un séchage.

**13.** Un procédé suivant la revendication 12, caractérisé en ce que la réaction est effectuée par broyage du colorant silane avec le substrat ou le support en présence du milieu réactionnel, soit à température ambiante, soit dans un réacteur chaud, pendant une période de temps de 2 à 12 heures.

**14.** Un procédé suivant les revendications 12 ou 13, caractérisé en ce que le pigment composite séparé par filtration est soumis à un traitement thermique à sec dans un four à 60 °C-110 °C pendant 4 à 8 heures avant lavage.

**15.** Une peinture, un émail à l'air, un émail à cuire au four, une encre d'impression ou une matière plastique, lorsqu'ils sont colorés avec un pigment composite suivant l'une quelconque des revendications 9 à 11.

## Ansprüche

**1.** Chinacridonfarbstoff, der mindestens eine Silangruppe enthält, gekennzeichnet durch die Formel

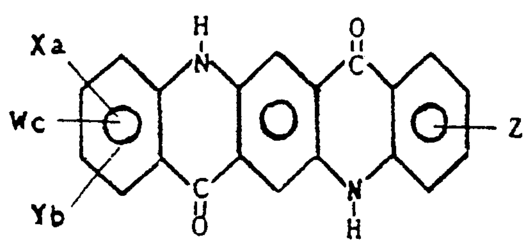

(I)

in welcher X eine $-SO_2NHR$-Gruppe ist, worin R eine lineare oder verzweigte Alkylgruppe mit 1 bis 6 Kohlenstoffatomen, eine Cycloalkylgruppe oder eine Phenylgruppe, gegebenenfalls durch ein oder mehrere Halogenatom(e) oder Alkyl- oder Alkoxygruppe(n) mit 1 bis 6 Kohlenstoffatomen substituiert, ist; Y und Z jeweils eine Silangruppe der Formel

$$-SO_2-NH-(CH_2)_n-\underset{\underset{(R_2)_q}{|}}{Si}-(R_1)_m(OH)_{p-m},$$

bedeuten, worin $R_1$ eine Alkoxygruppe mit 1 oder 2 Kohlenstoffatomen ist, $R_2$ eine Alkylgruppe mit 1 bis 4 Kohlenstoffatomen oder eine Phenylgruppe ist, n = 3, 4 oder 5 ist, q = 0 oder 1 ist und p und m ganze Zahlen sind, so daß, wenn q = 1 ist, p = 2 und m = 0, 1 oder 2 sind, und, wenn q = 0 ist, p = 3 und m = 0, 1, 2 oder 3 sind;
W eine $-SO_3H$-Gruppe ist;
a, b und c = 0 oder 1 sind, und zwar so gewählt, daß die Summe a + b + c = 1 ist.

**2.** Silanchinacridonfarbstoff gemäß Anspruch 1, dadurch gekennzeichnet, daß c = 0 ist, q = 0 ist und, wenn b = 1 ist, Y die gleiche Bedeutung wie Z hat.

**3.** Verfahren zur Herstellung eines Chinacridonfarbstoffes gemäß Anspruch 1, dadurch gekennzeichnet, daß ein Chinacridonsulfochlorid der Formel

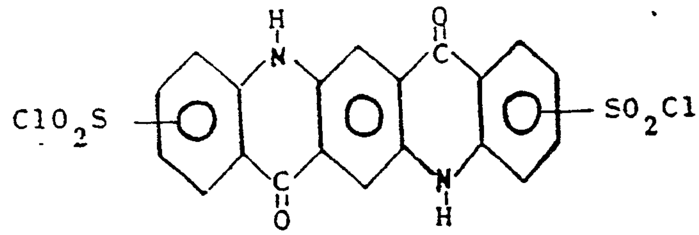

(II)

mit einer Silanverbindung der Formel

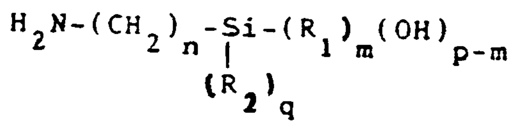

(III)

in welcher $R_1$, $R_2$, m, n, p und q wie in Anspruch 1 definiert sind, in einem molaren Verhältnis von Silanverbindung (III):
Sulfochlorid (II) von mindestens 1 und wahlweise mit einer Aminverbindung der Formel

$H_2N$-R (IV)

worin R wie in Anspruch 1 definiert ist, unter Verwendung von mindestens einem Mol Silanverbindung (III) und mindestens einem Mol Amin (IV) pro Mol Sulfochlorid (II) in einem Wasser und/oder ein organisches Lösungsmittel umfassenden Reaktionsmedium bei einer Temperatur von 5°C bis zur Rückflußtemperatur des Reaktionsmediums 1 bis 12 h umgesetzt wird.

**4.** Verfahren gemäß Anspruch 3, dadurch gekennzeichnet, daß die Reaktion in Gegenwart einer Salzsäure-Akzeptorverbindung durchgeführt wird.

**5.** Verfahren gemäß Anspruch 4, dadurch gekennzeichnet, daß die Salzsäure-Akzeptorverbindung aus $Na_2CO_3$, $NaHCO_3$, Triethylamin und Pyridin ausgewählt wird.

**6.** Verfahren gemäß irgendeinem der Ansprüche 3 bis 5, dadurch gekennzeichnet, daß das organische Lösungsmittel aus Dimethylformamid, Dioxan, Acetonitril, Pyridin, Triethylamin, Xylol, Nitrobenzol und Dichlorbenzol ausgewählt wird.

**7.** Verfahren gemäß irgendeinem der Ansprüche 3 bis 6, dadurch gekennzeichnet, daß das Aminoalkoxysilan der Formel (III) aus
γ-Aminopropyltriethoxysilan,
δ-Aminobutylphenyldiethoxysilan,
γ-Aminopropylmethyldiethoxysilan und
δ-Aminobutyltriethoxysilan
ausgewählt wird.

**8.** Verfahren gemäß irgendeinem der Ansprüche 3 bis 7, dadurch gekennzeichnet, daß das Amin der Formel (IV) aus Methylamin, Ethylamin, Propylamin, Butylamin, Pentylamin, Hexylamin und deren verzweigten Isomeren, Cyclohexylamin, Anilin, ortho-, meta- und para-Toluidinen, Chloranilinen oder -anisidinen, 2,4- oder 3,5-Xylidinen, Dianisidinen oder Dichloranilinen, 2-Methyl-4-chloranilin und 2,5-Dimethoxy-4-chloranilin ausgewählt wird.

**9.** Pigmentkombination, dadurch gekennzeichnet, daß sie einen Silanchinacridonfarbstoff gemäß Anspruch 1 oder 2, gepfropft auf ein festes anorganisches Substrat oder einen Träger, umfaßt.

**10.** Pigmentkombination gemäß Anspruch 9, dadurch gekennzeichnet, daß das anorganische Substrat oder der Träger aus $Ti_2$ -Gel, halbkristallinem $TiO_2$, Rutil-$Ti_2$ und Anatas-$TiO_2$, Mischungen von $TiO_2$ mit

$SiO_2$ und/oder $Al_2O_3$, $SiO_2$ und/oder $Al_2O_3$ und deren Mischungen ausgewählt wird, wobei das Substrat oder der Träger feinteilig ist und eine spezifische Oberfläche von 5 bis 500 $m^2/g$ hat.

**11.** Pigmentkombination gemäß Anspruch 9 oder 10, dadurch gekennzeichnet, daß sie 10 bis 50 Gew.-% Silanchinacridonfarbstoff in gepfropfter Form enthält.

**12.** Verfahren zur Herstellung einer Pigmentkombination gemäß Anspruch 9, dadurch gekennzeichnet, daß es die Schritte umfaßt: Umsetzen des anorganischen Substrates oder Trägers mit einem Silanchinacridonfarbstoff der Formel (I) in einem Wasser und/oder ein inertes organisches Lösungsmittel umfassenden Reaktionsmedium bei einer Temperatur von 20 °C bis zur Rückflußtemperatur des Reaktionsmediums und Abtrennen des Pigmentes durch Filtrieren, gefolgt von Waschen und Trocknen.

**13.** Verfahren gemäß Anspruch 12, dadurch gekennzeichnet, daß die Reaktion durchgeführt wird, indem der Silanfarbstoff mit dem Substrat oder Träger in Gegenwart des Reaktionsmediums entweder bei Raumtemperatur oder in einem heißen Reaktor für eine Dauer von 2 bis 12 h vermahlen wird.

**14.** Verfahren gemäß Anspruch 12 oder 13, dadurch gekennzeichnet, daß die durch Filtration abgetrennte Pigmentkombination vor dem Waschen 4 bis 8 h in einem Ofen bei 60 bis 110 °C einer Wärmetrocknungsbehandlung unterworfen wird.

**15.** Farbstoff, Sprühemaillack, Ofenemaillack, Druckfarbe oder Kunststoffmaterialien, die mit einer Pigmentkombination gemäß irgendeinen der Ansprüche 9 bis 11 gefärbt sind.